# EUROPEAN PATENT SPECIFICATION

(11) **EP 4 556 249 B1**
(45) Date of publication and mention of the grant of the patent: **30.09.2026**
(21) Application number: 24212385.9
(22) Date of filing: 12.11.2024
(51) Int. Cl.: B41J 11/00

(54) **DRYING APPARATUS AND IMAGE FORMING SYSTEM**
TROCKNUNGSVORRICHTUNG UND BILDERZEUGUNGSSYSTEM
APPAREIL DE SÉCHAGE ET SYSTÈME DE FORMATION D'IMAGES

(30) Priority: 16.11.2023 JP 2023194795
(43) Date of publication of application: 21.05.2025
(73) Proprietor: KYOCERA Document Solutions Inc., Osaka-shi, Osaka, 540-8585 (JP)
(72) Inventor: HAMADA, Takuya, Osaka-shi, Osaka, 540-8585 (JP)
(74) Representative: Kurig, Thomas

(56) References cited:
- JP-A- 2005 103 838
- JP-A- 2022 112 111
- JP-A- 2023 030 896
- JP-A- H07 167 447
- US-A1- 2012 154 498

## Description

### BACKGROUND

The present disclosure relates to a drying apparatus which dries ink ejected on a sheet, and an image forming system including the drying apparatus.

When an image is formed by an inkjet method, it is necessary to quickly dry ink ejected on a sheet in order to prevent the image from being disturbed, and the sheet from being deformed or stuck. As a means for drying the ink, a technique for applying heat to the conveyed sheet by infrared rays is known.

An infrared heater is provided with a reflector for reflecting infrared rays to the sheet in order to efficiently transmit the heat. However, since the surface of the reflector is made of metal, when the reflector is irradiated with infrared rays and heated to a high temperature, fogging occurs due to oxidation or sulfurization of the metal. When the fogging occurs, a reflectance decreases, the heat is absorbed, the reflector is heated to a higher temperature and may be damaged.

As a technique for detecting a decrease in reflectance of the reflector, the following techniques are known. JP2005-103838 discloses a technique which compares a light quantity inside and outside of a protective plate which protects an ultraviolet lamp, and detects dirt on the protective plate. In this case, since it becomes a high temperature in a case of infrared rays, if a sensor is provided in a place where infrared rays are always irradiated, the sensor may be damaged by heat. In addition, JPH07-167447 discloses a technique to detect dirt on a reflector provided in a heating cooker by an optical sensor. The technique can only detect dirt on certain areas of the reflector. Since it is impossible to predict where the fogging due to oxidation or sulfurization occurs, it is necessary to detect the entire area of the reflector. Furthermore, JP2001-96727 disclose a technique to detect a temperature with a thermistor through a hole formed in the reflector. Since this technique is designed to detect a temperature, a temperature decrease is not always caused by the fogging of the reflector, and the fogging of the reflector may be erroneously detected. JP2023-030896 discloses a drying apparatus according to the preamble of claim 1.

### SUMMARY

A drying apparatus according to the present disclosure includes an infrared heater, a reflector, and a measurement part. The reflector has a reflecting surface which reflects infrared rays. The measurement part includes a light emitting part and a light receiving part, and measures a reflectance at a plurality of places on the reflecting surface.

An image forming system according to the present disclosure includes an inkjet recording device which ejects ink on a sheet, and the drying apparatus which dries the ink ejected by the inkjet recording device.

### BRIEF DESCRIPTION OF THE DRAWINGS

FIG. 1 is a perspective view showing an appearance of an image forming system according to one embodiment of the present disclosure.
FIG. 2 is a front view schematically showing a configuration of the image forming system according to the embodiment of the present disclosure.
FIG. 3 is a front view schematically showing a configuration of a drying apparatus according to the embodiment of the present disclosure.
FIG. 4 is a block diagram showing an electrical configuration of the drying apparatus according to an embodiment of the present disclosure.
FIG. 5 is a perspective view showing a heating unit according to the embodiment of the present disclosure.
FIG. 6 is a perspective view showing an infrared heater and a reflector according to the embodiment of the present disclosure.
FIG. 7 is a front view showing the infrared heater and the reflector according to the embodiment of the present disclosure.
FIG. 8 is a plan view showing a measurement part according to the embodiment of the present disclosure.
FIG. 9 is a front view schematically showing an operation of the measurement part according to the embodiment of the present disclosure.
FIG. 10 is a front view schematically showing the operation of the measurement part according to the embodiment of the present disclosure.
FIG. 11 is a front view schematically showing the operation of the measurement part according to the embodiment of the present disclosure.
FIG. 12 is a front view schematically showing the operation of the measurement part according to the embodiment of the present disclosure.
FIG. 13 is a front view schematically showing the operation of the measurement part according to the embodiment of the present disclosure.
FIG. 14 is a plan view showing the measurement part according to a first modified example of the embodiment of the present disclosure.
FIG. 15 is a plan view showing the measurement part according to a second modified example of the embodiment of the present disclosure.

### BRIEF DESCRIPTION OF THE DISCLOSURE

Hereinafter, with reference to the drawings, a drying apparatus 120 and an image forming system 100 according to one embodiment of the present disclosure will be described.

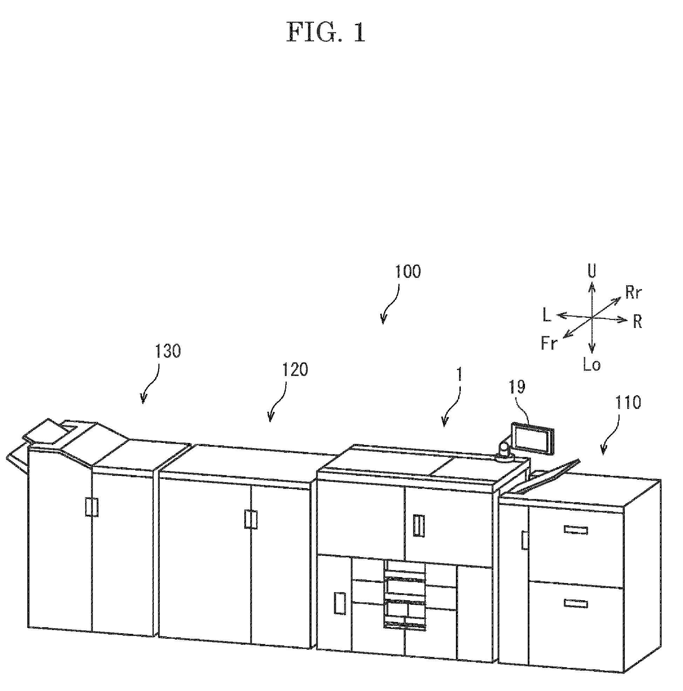

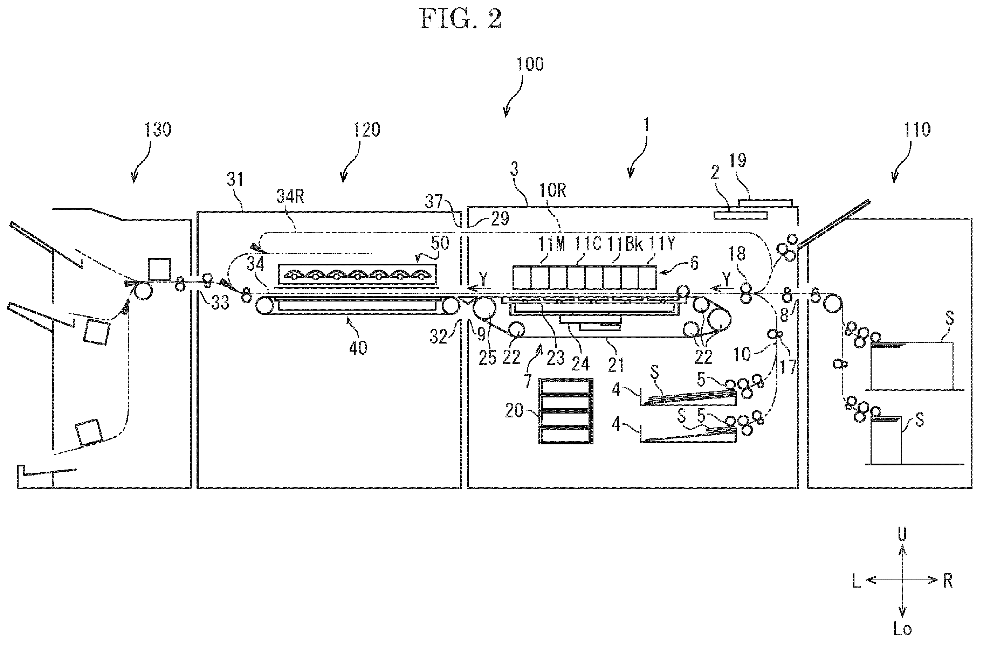

First, an entire configuration of the image forming system 100 will be described. FIG. 1 is a perspective view showing an appearance of the image forming system 100. FIG. 2 is a front view schematically showing a configuration of the image forming system 100. Hereinafter, the front sides of the paper planes on which FIG. 1 and FIG. 2 are drawn are defined as the front side of the image forming system 100, and the left-and-right direction will be described with reference to the direction in which the image forming system 100 is viewed from the front side. U, Lo, L, R, Fr and Rr in each drawing indicate the upper, lower, left, right, front and rear, respectively.

The image forming system 100 (see FIG. 1) includes a sheet feeding apparatus 110, an inkjet recording apparatus 1, a drying apparatus 120, and a post-processing apparatus 130. The sheet feeding apparatus 110 includes a large capacity sheet feeding deck capable of storing several thousand of sheets, and feeds the sheets to the inkjet recording apparatus 1. The inkjet recording apparatus 1 forms an image on the sheet by an inkjet method. The drying apparatus 120 heats the ink ejected on the sheet S to dry the ink. The post-processing apparatus 130 performs post-processing such as punching, stapling, folding, or the like on the sheet S.

The inkjet recording apparatus 1 (see FIG. 2) includes a rectangular parallelepiped body housing 3. In the lower portion of the body housing 3, a sheet feeding cassette 4 which stores the sheets S such as a plain paper and a coated paper, and a sheet feeding roller 5 which feeds the sheets S from the sheet feeding cassette 4 are provided. Above the sheet feeding cassette 4, a conveying unit 7 which attracts and conveys the sheet S in the Y direction is provided. Above the conveying unit 7, an image forming unit 6 which ejects the ink to form an image is provided. On the right side surface of the body housing 3, a sheet feeding port 8 through which the sheet S is introduced from the sheet feeding apparatus 110 is provided. On the left side surface of the body housing 3, a discharge port 9 through which the sheet is discharged to the drying apparatus 120 is provided.

Inside the body housing 3, a conveyance path 10 is provided from the sheet feeding roller 5 to the discharge port 9 through a gap between the conveying unit 7 and the image forming unit 6. The conveyance path 10 is mainly formed of plate-like members facing each other with a gap for passing the sheet S. On the conveyance path 10, a conveying roller 17 for holding and conveying the sheet S is provided. A registration roller 18 is provided on the upstream side of the image forming unit 6 in the conveyance direction Y.

The conveying unit 7 includes an endless conveying belt 21, a support plate 23, and a suction part 24. The conveying belt 21 has a large number of air holes (not shown), and is wound around a driving roller 25 and a driven roller 22. The support plate 23 has a large number of air holes (not shown), and its upper surface is in contact with the inner surface of the conveying belt 21. The suction part 24 sucks air through the air holes of the support plate 23 and the air holes of the conveying belt 21, so that the sheet S is attracted to the conveying belt 21. When the driving roller 25 is driven in the counterclockwise direction by a driving unit (not shown) including a motor and a reduction gear, the conveying belt 21 travels in the counterclockwise direction, and the sheet S attracted to the conveying belt 21 is conveyed in the Y direction.

The image forming unit 6 includes head units 11Y, 11Bk, 11C, and 11M (collectively referred to as a head unit 11). The head unit 11 includes one or more inkjet heads, for example, three inkjet heads arranged in a staggered manner (not shown). Ink containers 20 filled with the yellow, black, cyan, and magenta inks are connected to the head units 11Y, 11Bk, 11C, and 11M, respectively.

A control part 2 includes an arithmetic part and a storage part (not shown). The arithmetic part is, for example, a CPU (Central Processing Unit). The storage part includes a storage medium such as a ROM (Read Only Memory), a RAM (Random Access Memory), an EEPROM (Electrically Erasable Programmable Read Only Memory), and the like. The arithmetic part reads out the control program stored in the storage part and executes various processes. The control part 2 may be implemented by an integrated circuit that does not use software.

A display operation part 19 is provided on the upper portion of the body housing 3 (see FIG. 1 and FIG. 2). The display operation part 19 includes a display panel, a touch panel laminated on the display panel, and a keypad (not shown). The control part 2 displays a screen representing an operation menu, a status, or the like of the inkjet recording apparatus 1 on the display panel, and controls each part of the inkjet recording apparatus 1 in accordance with an operation detected by the touch panel and the keypad.

The basic image forming operation of the inkjet recording apparatus 1 is as follows. When an image forming job is inputted to the inkjet recording apparatus 1 from the display operation part 19 or an external computer, the sheet feeding roller 5 feeds the sheet S from the sheet feeding cassette 4 to the conveyance path 10, and the registration roller 18 whose rotation is stopped corrects the skew of the sheet S. When the registration roller 18 sends the sheet S to the conveying unit 7 at a predetermined timing, the conveying unit 7 attracts the sheet S to the conveying belt 21 and conveys the sheet S in the Y direction. When the control part 2 supplies raster format image data to a drive circuit in synchronization with the conveyance of the sheet S, the drive circuit supplies ejection signals corresponding to pixels to pressurizing elements, the ink is ejected from the nozzle, and the image is formed on the sheet S.

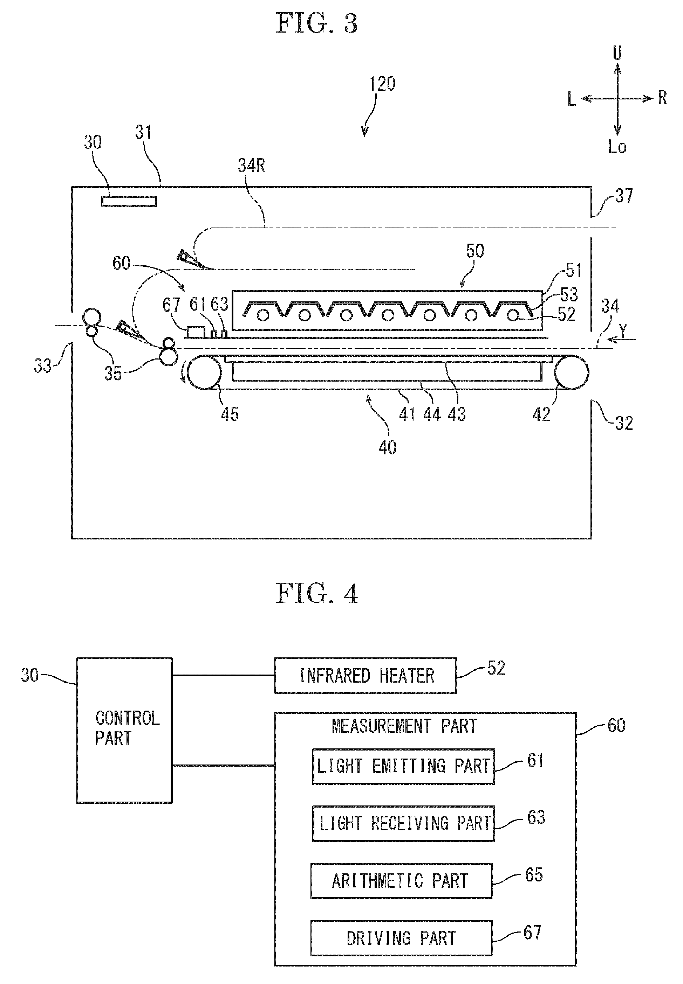

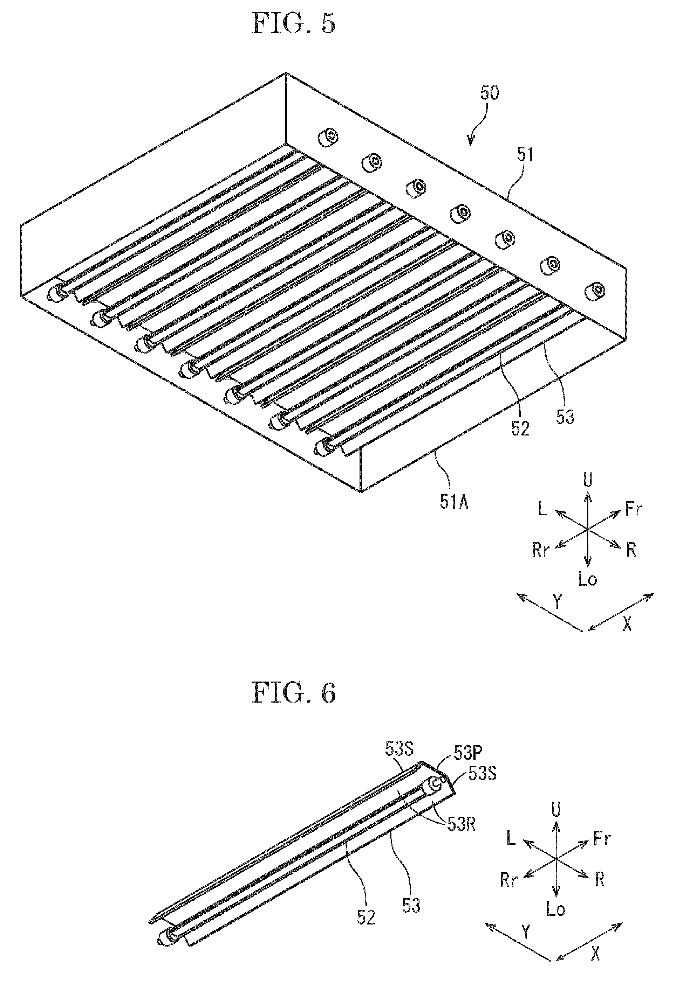

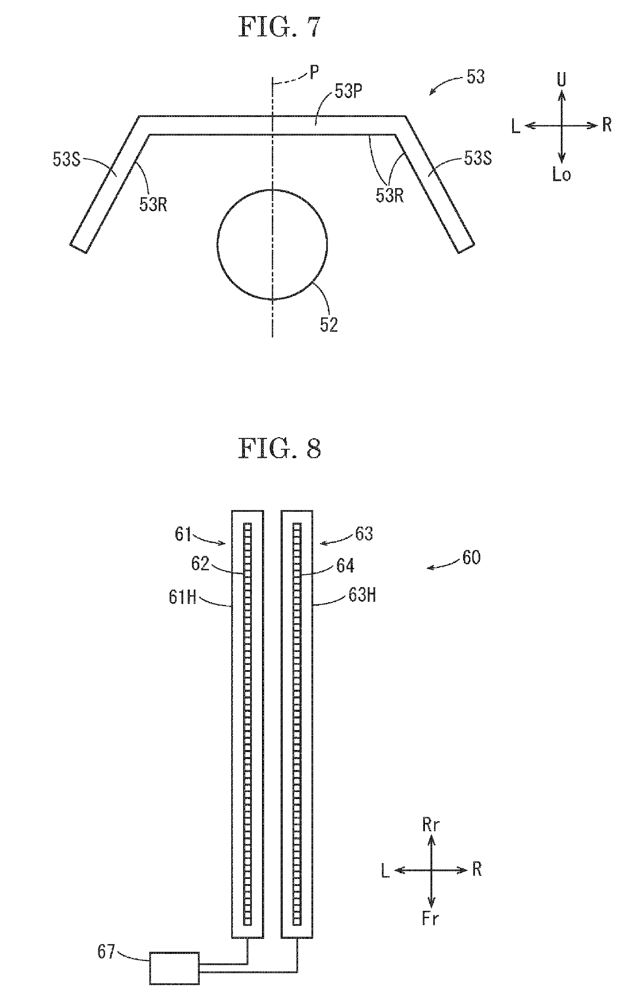

[Drying Apparatus] Next, the drying apparatus 120 will be described in detail. FIG. 3 is a front view schematically showing a configuration of the drying apparatus 120. FIG. 4 is a block diagram showing an electrical configuration of the drying apparatus 120. FIG. 5 is a perspective view showing a heating unit 50. FIG. 6 is a perspective view showing an infrared heater 52 and a reflector 53. FIG. 7 is a front view showing the infrared heater 52 and the reflector 53.

The drying apparatus 120 (see FIG. 3) includes a rectangular parallelepiped body housing 31. A conveying unit 40 is provided slightly above the center portion in the body housing 31. Above the conveying unit 40, a heating unit 50 is provided. The body housing 31 has a sheet feeding port 32 in the right side portion and a discharge port 33 in the left side portion, and is provided with a conveyance path 34 from the sheet feeding port 32 to the discharge port 33 through a gap between the conveying unit 40 and the heating unit 50. A conveying roller 35 for conveying the sheet S to the post-processing apparatus 130 is provided on the downstream side of the conveying unit 40 in the conveyance direction Y.

Above the heating unit 50, an inversion conveyance path 34R is provided, which is branched from the conveyance path 34 on the downstream side of the conveying unit 40 in the conveyance direction Y and has a switchback. The body housing 31 is provided with an inversion discharge port 37 above the sheet feeding port 32. In the body housing 3 of the inkjet recording apparatus 1, an inversion sheet feeding port 29 is provided above the discharge port 9. Above the image forming unit 6, an inversion conveyance path 10R is provided, which is merged with the conveyance path 10 on the upstream side of the registration roller 18 in the conveyance direction Y. In the case of double-sided printing, the front and rear sides of the sheet S are inverted by passing through the inversion conveyance path 34R and the inversion conveyance path 10R.

[Heating Unit] The heating unit 50 (see FIG. 5) includes a rectangular parallelepiped housing 51. In the lower portion of the housing 51, an opening 51A having a size corresponding to the entire lower surface of the rectangular parallelepiped is provided. The housing 51 houses a plurality (in this example, seven) of rod-shaped infrared heaters 52 whose longitudinal direction is along the width direction X (the front-and-rear direction) intersecting the conveyance direction Y. The infrared heater 52 (see FIG. 6 and FIG. 7) is, for example, a carbon heater in which a heating element of carbon fiber is sealed in a glass tube. The heating element emits infrared rays.

Above each of the infrared heaters 52, a reflector 53 is provided. The reflector 53 (see FIG. 6 and FIG. 7) has a flat plate-like parallel part 53P provided above the infrared heater 52 and in parallel with the conveyance path 34, and flat plate-like inclined parts 53S provided below both right and left end portions of the parallel part 53P and inclined with respect to the conveyance path 34. The left inclined part 53S is inclined such that the lower end portion is positioned leftward with respect to the upper end portion. The right inclined part 53S is inclined such that the lower end portion is inclined rightward with respect to the upper end portion.

The reflector 53 is formed plane symmetrically with respect to a symmetric plane P. The symmetric plane P of the reflector 53 is parallel to the longitudinal direction of the infrared heater 52, and passes through the center of the infrared heater 52. The surface of the reflector 53 on a side of the infrared heater 52 is a reflecting surface 53R which reflects infrared rays generated by the infrared heater 52 to the conveyance path 34. The reflecting surface 53R is made of metal.

[Conveying Unit] The conveying unit 40 (see FIG. 3) includes an endless conveying belt 41, a support plate 43, and a suction part 44. The conveying belt 41 has a large number of air holes (not shown), and is wound around a driving roller 45 and a driven roller 42. The support plate 43 has a large number of air holes (not shown), and its upper surface is in contact with the inner surface of the conveying belt 41. The suction part 44 sucks air through the air holes of the support plate 43 and the air holes of the conveying belt 41, so that the sheet S is attracted to the conveying belt 41. When the driving roller 45 is driven in the counterclockwise direction by a driving unit (not shown) including a motor and a reduction gear, the conveying belt 41 travels in the counterclockwise direction, and the sheet S attracted to the conveying belt 41 is conveyed in the Y direction. The upper surface of the conveying belt 41 (the surface facing the heating unit 50) is a part of the conveyance path 34.

[Measurement Part] FIG. 8 is a plan view showing a measurement part 60. The measurement part 60 includes a light emitting part 61, a light receiving part 63, an arithmetic part 65 (see FIG. 4), and a driving part 67.

[Light Emitting Part] The light emitting part 61 is a light emitting element array in which a plurality of light emitting elements 62 are arranged along the front-and-rear direction. As the light emitting element 62, for example, an LED (Light-Emitting Diode) or an LD (Laser Diode) is used. The light emitting element 62 is exposed from the upper surface of a housing 61H whose longitudinal direction is along the front-and-rear direction. The light emitting element 62 irradiates the reflecting surface 53R of the reflector 53 with light.

[Light Receiving Part] The light receiving part 63 is a light receiving element array in which a plurality of light receiving elements 64 are arranged along the front-and-rear direction. As the light receiving element 64, for example, a photoregister, a photodiode, a phototransistor, a CMOS (Complementary Metal-Oxide-Semiconductor) image sensor or the like is used. The light receiving element 64 is exposed from the upper surface of a housing 63H whose longitudinal direction is along the front-and rear direction. The light receiving element 64 receives the reflected light reflected by the reflecting surface 53R of the reflector 53 and outputs a signal representing an intensity of the reflected light.

In the present embodiment, the light receiving part 63 is arranged on the right side of the light emitting part 61, but the light receiving part 63 may be arranged on the left side of the light emitting part 61.

[Arithmetic Part] The arithmetic part 65 is composed of an integrated circuit. The arithmetic part 65 calculates a reflectance of the reflector 53 from the signals output from the light receiving elements 64, and outputs data indicating the reflectance of each light receiving element 64 to a control part 30.

[Driving Part] The driving part 67 (see FIG. 3) is provided in a space between the conveying unit 7 and the heating unit 50. The driving part 67 moves the light emitting part 61 and the light receiving part 63 in a direction (the left-and-right direction) intersecting the longitudinal direction of the infrared heater 52. As the driving part 67, for example, a ball screw, a rack and pinion, a timing belt, or the like is used. The driving part 67 can individually control the movement of the light emitting part 61 and the movement of the light receiving part 63. For example, the light emitting part 61 and the light receiving part 63 may be moved in the same direction, the light emitting part 61 and the light receiving part 63 may be moved in opposite directions, or one of the light emitting part 61 and the light receiving part 63 may be stopped and the other may be moved.

[Control Part] The control part 30 (see FIG. 3 and FIG. 4) includes an arithmetic part and a storage part (not shown). The arithmetic part is, for example, a CPU (Central Processing Unit). The storage part includes a storage medium such as a ROM (Read Only Memory), a RAM (Random Access Memory), and an EEPROM (Electrically Erasable Programmable Read Only Memory). The arithmetic part reads and executes the control program stored in the storage part to perform various processes. The control part 30 may be implemented by an integrated circuit without using software. The control part 30 is electrically connected to the infrared heater 52 and the measurement part 60.

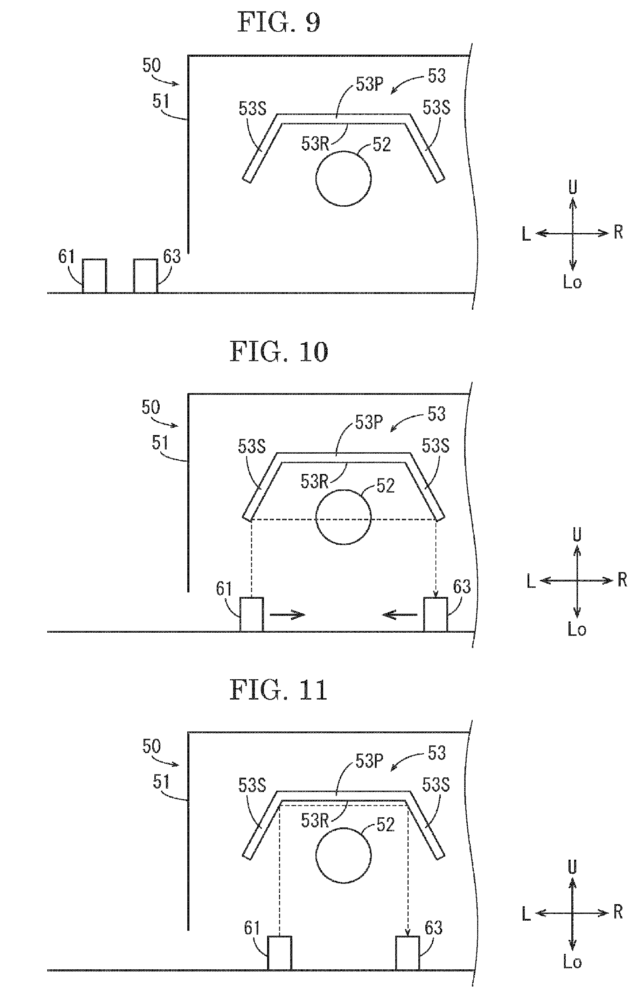

Next, the operation of the above configuration will be described. FIG. 9 to FIG. 13 are front views schematically showing the operation of the measurement part 60. FIG. 9 shows a state in which the light emitting part 61 and the light receiving part 63 are retracted to a retracted position. More specifically, when the inkjet recording apparatus 1 performs the image forming operation, the drying apparatus 120 dries the ink using the infrared heater 52, but if the light emitting part 61 and the light receiving part 63 are always arranged in a place irradiated with infrared rays, the light emitting part 61 and the light receiving part 63 may be damaged by heat. Therefore, the control part 30 operates the driving part 67 to retract the light emitting part 61 and the light receiving part 63 to the retracted position. The retracted position is a position where infrared rays are not irradiated from the infrared heater 52. In the example of FIG. 9, the retracted position is provided on the left side of the housing 51 of the heating unit 50, but the retracted position may be provided on the right side of the housing 51.

The control part 30 measures a reflectance at a predetermined timing. The predetermined timing may be, for example, periodic or when an accumulated time of the image forming operation from the last measurement reaches a predetermined value. However, even when the predetermined timing arrives, the control part 30 does not measure a reflectance when the inkjet recording apparatus 1 is performing the image forming operation, but measures a reflectance after the end of the image forming operation. The control part 30 moves the light emitting part 61 and the light receiving part 63 from the retracted position to below the heating unit 50 only when measuring a reflectance.

A procedure of measuring reflectance of the reflectors 53 of the heating unit 50 is the same. When measuring a reflectance, the control part 30 first moves the light receiving part 63 below the right end portion of the right inclined part 53S, and moves the light emitting part 61 below the left end portion of the left inclined part 53S (see FIG. 10). Next, the control part 30 turns on the light emitting elements 62 one by one to scan the reflecting surface 53R in one direction of the front and rear directions. Specifically, the control part 30 sequentially turns on the light emitting elements 62 one by one from the front side (or the rear side). The light generated by the light emitting element 62 is reflected rightward by the reflecting surface 53R of the left inclined part 53S and then reflected downward by the reflecting surface 53R of the right inclined part 53S. The arithmetic part 65 calculates a reflectance from an intensity of the reflected light received by the light receiving element 64 positioned at the same position in the front-and-rear direction as the light emitting element 62 that has been turned on, and outputs data indicating the reflectance to the control part 30.

Next, the control part 30 moves the light emitting part 61 rightward and the light receiving part 63 leftward by the same distance, and then scans the reflecting surface 53R in one direction of the front and rear directions. The control part 30 repeats the movement of the light emitting part 61 and the light receiving part 63 in the left-and-right direction and the scanning in the front-and-rear direction a predetermined number of times. By the movement the predetermined number of times, the light emitting part 61 reaches the right end portion of the left inclined part 53S, and the light receiving part 63 reaches the left end portion of the right inclined part 53S (see FIG. 11). In this way, the entire area of the reflecting surfaces 53R of the inclined parts 53S is scanned in the front-and-rear direction and the left-and-right direction.

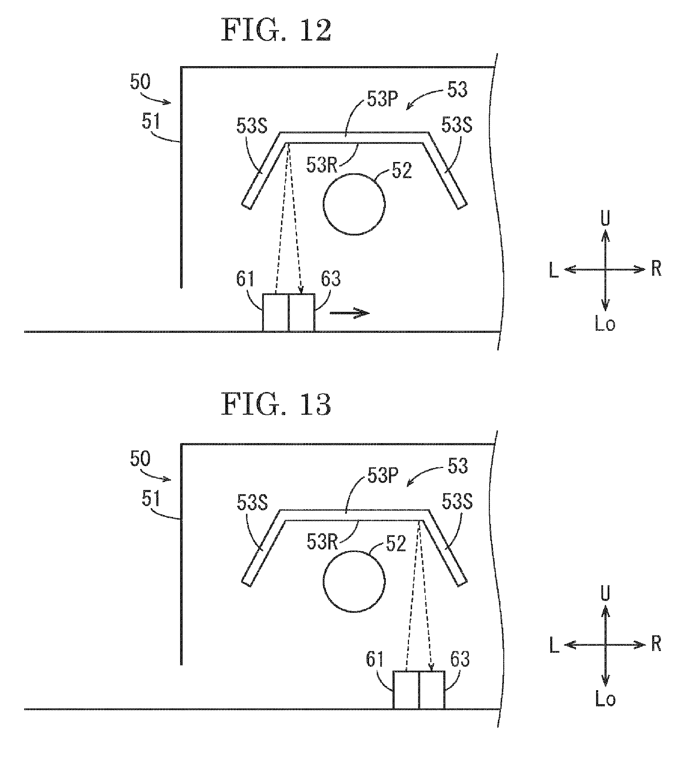

Next, the control part 30 moves the light receiving part 63 leftward by a predetermined distance. By this movement, the light receiving part 63 is positioned adjacent to the light emitting part 61 (see FIG. 12). Next, the control part 30 sequentially turns on the light emitting elements 62 one by one from the front side (or the rear side). The light generated by the light emitting element 62 is reflected downward by the reflecting surface 53R of the parallel part 53P. The arithmetic part 65 calculates a reflectance from an intensity of the reflected light received by the light receiving element 64 positioned at the same position in the front-and-rear direction as the light emitting element 62 that has been turned on, and outputs data indicating the reflectance to the control part 30.

Next, the control part 30 moves the light emitting part 61 and the light receiving part 63 rightward by the same distance, and then scans the reflecting surface 53R in one direction of the front and rear directions. The control part 30 repeats the rightward movement of the light emitting part 61 and the light receiving part 63 and the scanning in the front-and-rear direction a predetermined number of times. By the movement the predetermined number of times, the light emitting part 61 and the light receiving part 63 reach the right end portion of the parallel part 53P (see FIG. 13). In this way, the entire area of the reflecting surface 53R of the parallel part 53P is scanned in the front-and-rear direction and the left-and-right direction.

The control part 30 controls the infrared heater 52 according to the measurement result by the measurement part 60. For example, when the reflectance measured by the measurement part 60 is decreased, the control part 30 performs a treatment for compensating for a quantity of heat. Specifically, the control part 30 stores conversion information relating the reflectance and the electric power supplied to the infrared heater 52 in the form of a look-up table or the like. The conversion information is set to increase the power as the reflectance is lower. The control part 30 acquires a value of power corresponding to the reflectance measured by the measurement part 60 from the conversion information, and supplies power corresponding to the value to the infrared heater 52. This control compensates for the reduced quantity of heat due to the reduced reflectance.

If the reflectance measured by the measurement part 60 is lower than the minimum value of the reflectance included in the conversion information, it is impossible to compensate for the reduced quantity of heat. In this case, the control part 30 outputs predetermined information. Specifically, the control part 30 is connected through a communication line to an information terminal of a user who uses the image forming system 100 and an information terminal of a maintenance management company in charge of maintenance management of the image forming system 100. The control part 30 transmits information that the reflector 53 needs to be replaced because of decrease in reflectance of the reflector 53, to the information terminal of the user and the maintenance manager.

The drying apparatus 120 according to the present embodiment described above includes the infrared heater 52, the reflector 53 having the reflecting surface 53R which reflects infrared rays, and the measurement part 60 including the light emitting part 61 and the light receiving part 63 and measuring a reflectance at a plurality of positions on the reflecting surface 53R. According to this configuration, a reflectance of the reflector 53 can be measured over a wide range.

Further, according to the drying apparatus 120 according to the present embodiment, the infrared heater 52 is formed in a rod-like shape, the light emitting part 61 has a plurality of the light emitting elements 62 provided along the longitudinal direction of the infrared heater 52, the light receiving part 63 has a plurality of the light receiving elements 64 provided along the longitudinal direction, and the measurement part 60 is provided with the driving part 67 which moves the light emitting part 61 and the light receiving part 63 in a direction intersecting the longitudinal direction. According to this configuration, since it is not necessary to move the light emitting part 61 and the light receiving part 63 in the longitudinal direction, a reflectance can be measured quickly with a simple configuration.

In addition, according to the drying apparatus 120 according to the present embodiment, the reflector 53 is formed plane symmetrically with respect to the symmetric plane **P,** and the driving part 67 brings the light emitting part 61 and the light receiving part 63 closer to or away from each other at the plane symmetrical arrangement across the symmetric plane P of the reflector 53. According to this configuration, a reflectance of the reflector 53 formed plane symmetrically can be efficiently measured.

Further, according to the drying apparatus 120 according to the present embodiment, the reflector 53 has the parallel part 53P parallel to the conveyance path 34 along which the sheet S is conveyed, and the inclined parts 53S inclined with respect to the conveyance path 34, and the driving part 67 brings the light emitting part 61 and the light receiving part 63 closer to or away from at a plane symmetrical arrangement across the symmetric plane P of the reflector 53 for the inclined parts 53S, and moves the light emitting part 61 and the light receiving part 63 adjacent to each other in the same direction for the parallel part 53P. With this configuration, a reflectance of the parallel part 53P of the reflector 53 can be measured.

According to the drying apparatus 120 according to the present embodiment, the driving part 67 retracts the light emitting part 61 and the light receiving part 63 to a place where infrared rays are not irradiated from the infrared heater 52 during a period when the infrared heater 52 is turned on. According to this configuration, the light emitting part 61 and the light receiving part 63 can be prevented from being damaged by heat.

Further, the drying apparatus 120 according to the present embodiment includes the control part 30 which performs the treatment for compensating for a quantity of heat when the reflectance measured by the measurement part 60 decreases. According to this configuration, even when the reflectance is decreased, a necessary quantity of heat can be supplied.

Further, according to the drying apparatus 120 according to the present embodiment, the control part 30 outputs the predetermined information when the necessary quantity of heat cannot be obtained even by the treatment for compensating for a quantity of heat. According to this configuration, replacement of the reflector 53 can be promoted.

The image forming system 100 according to the present embodiment further includes the inkjet recording apparatus 1 which ejects the ink onto the sheet S, and the drying apparatus 120 which dries the ink ejected by the inkjet recording apparatus 1. According to this configuration, the ink can be dried efficiently.

The above embodiment may be modified as follows.

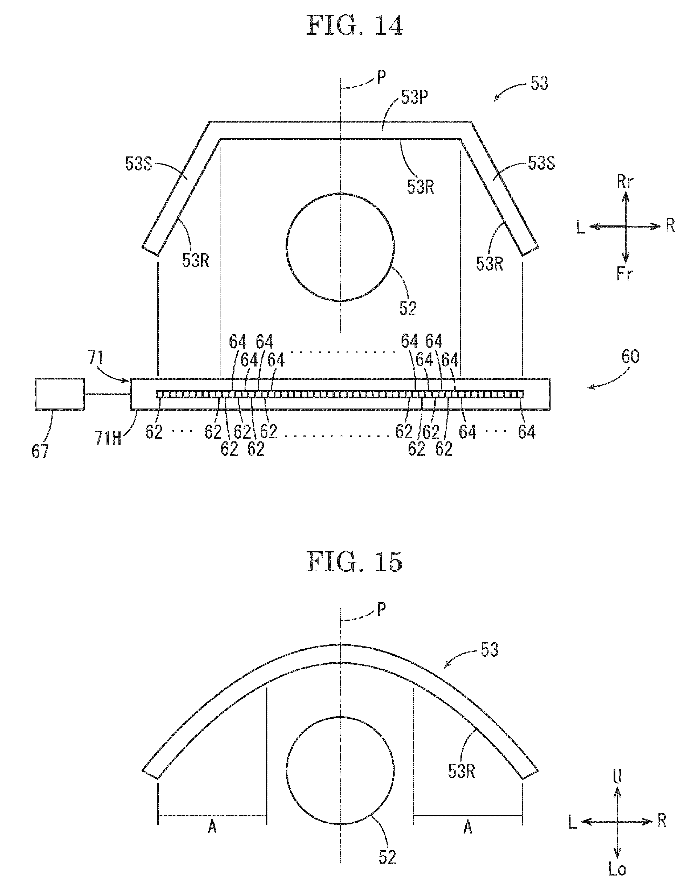

[First Modified Example] FIG. 14 is a plan view showing the measurement part 60 according to the first modified example. The measurement part 60 includes a light emitting and receiving part 71 in which the light emitting elements 62 and the light receiving elements 64 are arranged, instead of the light emitting part 61 and the light receiving part 63 of the above embodiment. The light emitting and receiving part 71 is housed in a housing 71H whose longitudinal direction is along the left-and-right direction, and the light emitting elements 62 and the light receiving elements 64 are arranged along the longitudinal direction. A plurality of the light emitting elements 62 are arranged along the longitudinal direction in a region of the upper surface of the housing 71H corresponding to the left inclined part 53S. A plurality of the light receiving elements 64 are arranged along the longitudinal direction in a region of the upper surface of the housing 71H corresponding to the right inclined part 53S. In a region corresponding to the parallel part 53P, the light emitting elements 62 and the light receiving elements 64 are arranged alternately along the longitudinal direction.

For the inclined parts 53S, the control part 30 controls the light emitting elements 62 corresponding to the left inclined part 53S to emit light one by one in order from the left end. When the left end light emitting element 62 emits light, the right end light receiving element 64 corresponding to the right inclined part 53S receives the light. When the second light emitting element 62 from the left emits light, the second light receiving element 64 from the right receives the light. On the other hand, for the parallel part 53P, the control part 30 controls the light emitting elements 62 corresponding to the parallel part 53P to emit light one by one in order from the left end. The light receiving element 64 on the right side of the light emitting element 62 which has emitted light receives the light. In this manner, the reflecting surface 53R is scanned in the left-and-right direction. The order in which the light emitting elements 62 emit light may be different from the above.

The driving part 67 moves the light emitting and receiving part 71 in the front-and-rear direction. The control part 30 repeats the process of moving the light emitting and receiving part 71 in one direction of the front and rear directions by a predetermined distance to scan the reflecting surface 53R in the left-and-right direction. According to this configuration, a number of the light emitting elements 62 and light receiving elements 64 can be reduced as compared with the above-described embodiment.

The light emitting and receiving part 71 may have a configuration in which a plurality of arrays of light emitting elements 62 and light receiving elements 64 shown in FIG. 14 are arranged in the front-and-rear direction. According to this configuration, the driving part 67 is not required.

[Second Modified Example] FIG. 15 is a front view showing the reflector 53 according to the second modified example. In this modified example, the reflecting surface 53R is formed in a parabolic shape when viewed from the front-and-rear direction. In the case of this shape, the processing corresponding to the inclined parts 53S of the above embodiment is performed within a predetermined range A from both left and right ends of the reflecting surface 53R, and the processing corresponding to the parallel part 53P of the above embodiment is performed on the center side of the predetermined ranges A. With this configuration, a reflectance of the reflector 53 can be measured over a wide range.

[Third Modified Example] In the above embodiment, the light emitting part 61 includes a plurality of the light emitting elements 62 provided along the longitudinal direction of the infrared heater 52, the light receiving part 63 includes a plurality of the light receiving elements 64 provided along the longitudinal direction, and the measurement part 60 includes the driving part 67 which moves the light emitting part 61 and the light receiving part 63 in a direction intersecting the longitudinal direction. However, the light emitting part 61 may have one light emitting element 62, the light receiving part 62 may have one light receiving elements 64, and the measurement part 60 may include the driving part 67 which moves the light emitting part 61 and the light receiving part 63 in the longitudinal direction and a direction intersecting the longitudinal direction. According to this configuration, a number of the light emitting elements 62 and light receiving elements 64 can be reduced to one.

## Claims

1. A drying apparatus (120) for drying ink ejected onto a sheet, the drying apparatus (120) comprising:
an infrared heater (52);
a reflector (53) having a reflecting surface (53R) which reflects infrared rays; and
a measurement part (60) which includes a light emitting part (61) and a light receiving part (63),
**characterized in that**
the measurement part (60) measures a reflectance at a plurality of places on the reflecting surface (53R).

2. The drying apparatus (120) according to claim 1, wherein
the infrared heater (52) is formed in a rod-like shape,
the light emitting part (61) includes a plurality of light emitting elements (62) provided along a longitudinal direction of the infrared heater (52),
the light receiving part (63) includes a plurality of light receiving elements (64) provided along the longitudinal direction, and
the measurement part (60) includes a driving part (67) which moves the light emitting part (61) and the light receiving part (62) in a direction intersecting the longitudinal direction.

3. The drying apparatus (120) according to claim 2, wherein
the reflector (53) is formed plane symmetrically,
the driving part (67) brings the light emitting part (61) and the light receiving part (63) close to or away from each other in a plane symmetrical arrangement across a symmetric plane of the reflector (53).

4. The drying apparatus (120) according to claim 3, wherein
the reflector (53) has:
a parallel part (53P) parallel to a conveyance path along which a sheet is conveyed; and
an inclined part (53S) inclined with respect to the conveyance path,
the driving part (67) brings the light emitting part (61) and the light receiving part (63) close to or away from each other at a plane symmetrical arrangement across the symmetric plane of the reflector (53) for the inclined part (53S), and moves the light emitting part (61) and the light receiving part (63) adjacent to each other in the same direction for the parallel part (53S).

5. The drying apparatus (120) according to claim 2, wherein
the driving part (67) retracts the light emitting part (61) and the light receiving part (63) to a place where infrared rays is not irradiated from the infrared heater (52), during a period when the infrared heater (52) is turned on.

6. The drying apparatus (120) according to claim 1, comprising:
a control part (30) which performs a treatment for compensating for a quantity of heat when a reflectance measured by the measurement part (60) is insufficient.

7. The drying apparatus (120) according to claim 6, wherein
the control part (30) outputs predetermined information when a required quantity of heat is not obtained by the treatment for compensating for a quantity of heat.

8. An image forming system (100) comprising:
an inkjet recording device (1) which ejects ink on a sheet; and
a drying apparatus (120) according to claim 1, which dries the ink ejected by the inkjet recording device (1).

## Patentansprüche

1. Trocknungsvorrichtung (120) zum Trocknen von auf ein Blatt ausgestoßener Tinte, wobei die Trocknungsvorrichtung (120) umfasst:
einen Infrarotstrahler (52);
einen Reflektor (53) mit einer reflektierenden Oberfläche (53R), die Infrarotstrahlen reflektiert; und
ein Messteil (60), das ein Lichtemissionsteil (61) und ein Lichtempfangsteil (63) umfasst,
**dadurch gekennzeichnet, dass**
das Messteil (60) ein Reflexionsvermögen an einer Vielzahl von Stellen auf der reflektierenden Oberfläche (53R) misst.

2. Trocknungsvorrichtung (120) nach Anspruch 1, wobei
der Infrarotstrahler (52) stabförmig ausgebildet ist,
das Lichtemissionsteil (61) eine Vielzahl von Lichtemissionselementen (62) umfasst, die entlang einer Längsrichtung des Infrarotstrahlers (52) bereitgestellt sind,
das Lichtempfangsteil (63) eine Vielzahl von Lichtempfangselementen (64) umfasst, die entlang der Längsrichtung bereitgestellt sind, und
das Messteil (60) ein Antriebsteil (67) umfasst, das das Lichtemissionsteil (61) und das Lichtempfangsteil (62) in einer Richtung bewegt, die die Längsrichtung schneidet.

3. Trocknungsvorrichtung (120) nach Anspruch 2, wobei
der Reflektor (53) ebenensymmetrisch ausgebildet ist,
das Antriebsteil (67) das Lichtemissionsteil (61) und das Lichtempfangsteil (63) in einer ebenensymmetrischen Anordnung über eine Symmetrieebene des Reflektors (53) hinweg einander annähert oder voneinander entfernt.

4. Trocknungsvorrichtung (120) nach Anspruch 3, wobei
der Reflektor (53) aufweist:
ein paralleles Teil (53P), das parallel zu einem Förderweg verläuft, entlang dessen ein Blatt gefördert wird; und
ein geneigtes Teil (53S), das in Bezug auf den Förderweg geneigt ist,
wobei das Antriebsteil (67) das Lichtemissionsteil (61) und das Lichtempfangsteil (63) in einer ebenensymmetrischen Anordnung über die Symmetrieebene des Reflektors (53) hinweg für das geneigte Teil (53S) einander annähert oder voneinander entfernt und das Lichtemissionsteil (61) und das Lichtempfangsteil (63) für das parallele Teil (53S) in derselben Richtung aneinander angrenzend bewegt.

5. Trocknungsvorrichtung (120) nach Anspruch 2, wobei
das Antriebsteil (67) das Lichtemissionsteil (61) und das Lichtempfangsteil (63) an eine Stelle zurückzieht, die nicht mit Infrarotstrahlen von dem Infrarotstrahler (52) bestrahlt wird, während eines Zeitraums, in dem der Infrarotstrahler (52) eingeschaltet ist.

6. Trocknungsvorrichtung (120) nach Anspruch 1, umfassend:
ein Steuerteil (30), das eine Maßnahme zum Ausgleich einer Wärmemenge durchführt, wenn ein von dem Messteil (60) gemessenes Reflexionsvermögen unzureichend ist.

7. Trocknungsvorrichtung (120) nach Anspruch 6, wobei
das Steuerteil (30) vorbestimmte Informationen ausgibt, wenn durch die Maßnahme zum Ausgleich einer Wärmemenge keine erforderliche Wärmemenge erzielt wird.

8. Bilderzeugungssystem (100), umfassend:
eine Tintenstrahlaufzeichnungsvorrichtung (1), die Tinte auf ein Blatt ausstößt; und
eine Trocknungsvorrichtung (120) nach Anspruch 1, die die von der Tintenstrahlaufzeichnungsvorrichtung (1) ausgestoßene Tinte trocknet.

## Revendications

1. Un appareil de séchage (120) destiné à sécher de l'encre projetée sur une feuille, l'appareil de séchage (120) comprenant :
un élément chauffant à infrarouge (52) ;
un réflecteur (53), présentant une surface réfléchissante (53R) qui réfléchit les rayons infrarouges ; et
une partie de mesure (60), qui comprend une partie (61) d'émission de lumière et une partie (63) de réception de lumière, **caractérisé en ce que**
la partie de mesure (60) mesure un coefficient de réflexion en plusieurs emplacements sur la surface réfléchissante (53R).

2. L'appareil de séchage (120) selon la revendication 1, dans lequel
l'élément chauffant à infrarouge (52) présente une forme de tige,
la partie (61) d'émission de lumière comprend une pluralité d'éléments (62) d'émission de lumière agencés le long d'une direction longitudinale de l'élément chauffant à infrarouge (52),
la partie (63) de réception de lumière comprend une pluralité d'éléments (64) de réception de lumière agencés le long de la direction longitudinale, et
la partie de mesure (60) comprend une partie d'entraînement (67) qui déplace la partie (61) d'émission de lumière et la partie (62) de réception de lumière dans une direction qui est en intersection avec la direction longitudinale.

3. L'appareil de séchage (120) selon la revendication 2, dans lequel
le réflecteur (53) est réalisé de manière symétrique par rapport à un plan,
la partie d'entraînement (67) rapproche ou éloigne l'une de l'autre la partie (61) d'émission de lumière et la partie (63) de réception de lumière, selon une disposition symétrique par rapport à un plan de symétrie du réflecteur (53).

4. L'appareil de séchage (120) selon la revendication 3, dans lequel
le réflecteur (53) présente :
une partie parallèle (53P), parallèle à un chemin de transport le long duquel une feuille est transportée ; et
une partie inclinée (53S), inclinée par rapport au chemin de transport,
la partie d'entraînement (67) rapproche ou éloigne l'une de l'autre la partie (61) d'émission de lumière et la partie (63) de réception de lumière, selon une disposition symétrique par rapport au plan de symétrie du réflecteur (53) pour la partie inclinée (53P), et déplace la partie (61) d'émission de lumière et la partie (63) de réception de lumière de manière à les placer l'une à côté de l'autre dans la même direction pour la partie parallèle (53S).

5. L'appareil de séchage (120) selon la revendication 2, dans lequel
la partie d'entraînement (67) rétracte la partie (61) d'émission de lumière et la partie (63) de réception de lumière vers un emplacement où aucun rayon infrarouge n'est émis par l'émetteur infrarouge (52), pendant une période durant laquelle l'émetteur infrarouge (52) est activé.

6. L'appareil de séchage (120) selon la revendication 1, comprenant :
une partie de commande (30) qui effectue un traitement visant à compenser une quantité de chaleur lorsque le coefficient de réflexion mesuré par la partie de mesure (60) est insuffisant.

7. L'appareil de séchage (120) selon la revendication 6, dans lequel
la partie de commande (30) émet des informations prédéterminées lorsque la quantité de chaleur requise n'est pas obtenue par le traitement de compensation pour la quantité de chaleur.

8. Un système (100) de formation d'images comprenant :
un appareil d'enregistrement (1) à jet d'encre, qui éjecte de l'encre sur une feuille ; et
un appareil de séchage (120) selon la revendication 1, qui sèche l'encre éjectée par l'appareil d'enregistrement (1) à jet d'encre.
